# EUROPÄISCHE PATENTSCHRIFT

(11) **EP 2 825 401 B1**
(45) Veröffentlichungstag und Bekanntmachung des Hinweises auf die Patenterteilung: **14.09.2016**
(21) Anmeldenummer: 13703367.6
(22) Anmeldetag: 01.02.2013
(51) Int. Cl.: B60C 27/06, B62D 55/04, B62D 55/205, B62D 55/20

(54) **GLEITSCHUTZKETTE MIT SEITENSTABILEN FÜHRUNGSKETTEN**
ANTI-SKID DEVICE WITH SIDE-STABLE GUIDING CHAINS
DISPOSITIF ANTIDERAPANTE AVEC DES CHAINES LATERALES STABLES

(30) Priorität: 16.03.2012 DE 102012102231
(43) Veröffentlichungstag der Anmeldung: 21.01.2015
(73) Patentinhaber: Erlau AG, 73431 Aalen (DE)
(72) Erfinder: WEERTS, Mathis, 26129 Oldenburg (DE); RIEGER, Johannes, 73447 Oberkochen (DE)
(74) Vertreter: Grünecker Patent- und Rechtsanwälte PartG mbB
(86) Internationale Anmeldenummer: PCT/EP2013/051984
(87) Internationale Veröffentlichungsnummer: WO 2013/135427

(56) Entgegenhaltungen:
- WO-A1-2004/035332
- CA-A1- 2 152 040
- US-A- 1 336 363
- US-A- 2 973 995
- US-A- 5 951 124

## Beschreibung

Die Erfindung betrifft eine Gleitschutzkette für wenigstens einen Reifen.

Um auf rutschigem Untergrund, wie Matsch und Schnee, ausreichend Traktion für die Räder insbesondere von Tandemachsen bereitzustellen, werden üblicherweise Plattenbänder, wie sie beispielsweise die Firma Olofsfors herstellt, verwendet. Die WO-A-2011142701 und WO-A-9937525 zeigen solche Plattenbänder. Plattenbänder haben jedoch ein hohes Gewicht und bieten nicht immer ausreichende Traktion.

Als alternative Lösung zu Plattenbändern sind einfache Gleitschutzketten bekannt, beispielsweise aus der DE-U-89433881. Da jedoch Tandemachsen nur an einem Radpaar bekettet werden dürfen, hält sich bei einfachen Gleitschutzketten der Traktionsgewinn in Grenzen. Gegenüber Plattenbändern sind jedoch die Gleitschutzketten deutlich leichter und einfacher zu montieren.

Aus der WO 2004/035332 A1 ist eine faltbare Schneekette bekannt, bei der U-förmige Traktionselemente an zusammenfaltbaren Ringen befestigt sind. Die US 1 336 363 A zeigt eine Gleitschutzvorrichtung, bei der Kettenabschnitte an zwei Ringen befestigt sind, wobei die Ringe aus jeweils zwei Halbringen bestehen.

In Anbetracht der oben beschriebenen, bekannten Lösungen liegt der Erfindung die Aufgabe zugrunde, insbesondere für Tandemachsen eine leichte Gleitschutzvorrichtung mit hoher Traktion zu schaffen, die einfach zu montieren ist und ein geringes Gewicht aufweist.

Gelöst wird diese Aufgabe erfindungsgemäß durch eine Gleitschutzkette zur Anbringung an wenigstens einen Reifen, wobei die Gleitschutzkette zwei seitliche, seitenstabile Führungsketten, die im montierten Zustand seitlich der Laufflächen der Reifen angeordnet sind, und ein biegeschlaffes Laufnetz, das sich zwischen den beiden Führungsketten erstreckt, aufweist.

Die Führungsketten sind erfindungsgemäß seitenstabil und damit in seitlicher Richtung nicht biegeschlaff, so dass die Gleitschutzkette die Spur gut hält und die Räder nicht aus der Führungskette herauslaufen können. Die Führungsketten neben den Laufflächen zentrieren die Gleitschutzkette auf dem wenigstens einen Reifen. Gleichzeitig ist durch die Position der Führungsketten seitlich der Laufflächen sichergestellt, dass zwischen den Führungsketten und dem Laufnetz allenfalls geringe Unterschiede in der Umfangsgeschwindigkeit bestehen, so dass ein stabiler Umlauf der Gleitschutzkette mit nur geringen Kräften im Laufnetz erreicht wird.

Die Traktion wird vornehmlich nicht durch die Führungsketten, sondern durch das zwischen den beiden Führungsketten angeordnete und somit auf der Lauffläche der Reifen aufliegende Laufnetz erzeugt. Die erfindungsgemäße Lösung führt zu einer Gleitschutzvorrichtung mit hoher Traktion, die einfach zu montieren ist und ein geringes Gewicht aufweist. Aufgrund des Laufnetzes beschädigen die erfindungsgemäßen Gleitschutzketten im Unterschied zu Plattenbändern die Straße nicht.

Im Folgenden sind weitere, jeweils für sich vorteilhafte Ausgestaltungen der Erfindung beschrieben. Die einzelnen Ausgestaltungen sind dabei beliebig miteinander kombinierbar.

Die im Bereich Frost- und Landwirtschaft eingesetzten Reifen sind oft sehr grobstollig. Im Folgenden ist bei derartigen Reifen als Reifenflanke der profilierte Bereich der Seitenwand bezeichnet. Die Reifenschulter liegt am seitlichen Ende der Lauffläche. Sie kann vom axial innen liegenden Ende der Reifenflanke beabstandet sein, wenn das Profil aufgrund seiner Profiltiefe einen Teil der Seitenwand des Reifens einnimmt.

Soweit auf Abmessungen des Reifens Bezug genommen ist, wird von einem mit dem jeweiligen, werkseitig vorgeschrieben Betriebsdruck gefüllten Reifen im Neuzustand oder einem ordnungsgemäßen Verschleißzustand ausgegangen. Die im Bereich der Forst- und Landwirtschaft verwendeten Reifen sind hinsichtlich ihrer Größen normiert. Die erfindungsgemäßen Gleitschutzketten sind jeweils auf bestimmte Größen von Reifen abgestimmt.

Nach einer ersten Ausführungsform ist es von Vorteil, wenn im Betrieb der Gleitschutzkette zwischen Reifen bzw. Rädern und Untergrund ausschließlich das Laufnetz zu liegen kommt. Durch diese Maßnahme wird ein vorzeitiger Verschleiß der Führungsketten verhindert, da diese nicht im Bereich der Lauffläche zwischen Fahrzeug und Untergrund zu liegen kommen.

Um zu verhindern, dass sich das Laufnetz insbesondere beim Umlaufen der Gleitschutzkette um zwei abstandsunveränderliche am Fahrzeug hintereinander angeordnete Räder zu sehr spannt, kann gemäß einer weiteren vorteilhaften Ausgestaltung das Laufnetz in Umfangsrichtung Leiterabschnitte aufweisen, die mit dem übrigen Laufnetz ausschließlich über die Führungsketten verbunden sind. In Umfangsrichtung aufeinander folgende Leiterabschnitte bilden somit voneinander unabhängige Traktionssegmente, die über das Laufnetz keine Kräfte in Umfangsrichtung weiterleiten können. Die Weiterleitung derartiger Kräfte, wie auch der Zusammenhalt der Gleitschutzkette erfolgt bei dieser Ausgestaltung ausschließlich über die Führungsketten. Da die Führungsketten bevorzugt nicht auf der Lauffläche aufliegen, behalten sie eine gewisse Beweglichkeit in Umfangsrichtung und können Spannungen und Verschiebungen im Laufnetz ausgleichen.

Ferner kann das Laufnetz Leiterabschnitte aufweisen, die sich, bevorzugt in seitlicher Richtung, von der einen zur anderen Führungskette insbesondere durchgängig erstrecken. Die Leiterabschnitte können Kettenstränge aufweisen oder aus Kettensträngen bestehen. Die Kettenstränge können aus einheitlich oder unterschiedlich ausgestalteten Kettengliedern aufgebaut sein, beispielsweise aus Rundstahl- oder Profilstahl-Kettengliedern oder aus Steg-Ring-Kombinationen.

Eine besonders einfache Ausgestaltung der Gleitschutzkette kann vorsehen, dass die Leiterabschnitte Leiterstränge, also sich durchgängig von Führungskette zu Führungskette erstreckenden Kettenstränge, aufweisen sind. Die Leiterabschnitte können jedoch auch aus in seitlicher Richtung x- oder o-förmig verlaufenden Kettensträngen aufgebaut sein.

Damit die Gleitschutzkette eine hohe Spurtreue aufweist, kann das Laufnetz wenigstens eine sich in Umfangsrichtung erstreckende Spurkante aufweisen. Die Spurkanten sind insbesondere von radial außen liegenden Abschnitten des Laufnetzes gebildet, die sich im Betrieb in den Untergrund eindrücken. Aufgrund ihrer Ausrichtung verhindern die Spurkanten ein seitliches Abrutschen des Reifens.

Weist ein Leiterabschnitt mehrere Leiterstränge auf, so können diese durch ein Spurstück oder mehrere Spurstücke miteinander verbunden sein. Die Spurkanten können an beliebigen Elementen des Laufnetzes, insbesondere aber an den Spurstücken ausgebildet sein. Die Spurstücke können in Umfangsrichtung verlaufende Elemente, beispielsweise Kettenglieder, des Laufnetzes sein. Auch ein Leiterabschnitt, der lediglich einen einzigen Kettenstrang aufweist, kann Spurkanten oder Spurstücke aufweisen.

Um das Laufnetz möglichst frei von in Umfangsrichtung verlaufenden Kräften zu halten, kann gemäß einer weiteren vorteilhaften Ausgestaltung vorgesehen sein, dass sich die Leiterabschnitte in Umfangsrichtung über nicht mehr als die Länge der Reifenaufstandsfläche in Umfangsrichtung erstrecken.

Der strukturelle Zusammenhalt der Gleitschutzkette ist bevorzugt durch die Führungsketten gewährleistet. Die Führungsketten können insbesondere das Laufnetz zusammenhalten.

Die Führungsketten können als Gelenkketten, insbesondere als Laschenketten und/oder als Gabellaschenketten ausgestaltet sein. Der Vorteil dieser Ausgestaltung liegt darin, dass Laschenketten ohne besondere konstruktive Maßnahmen eine hohe Seitenstabilität aufweisen. Außerdem sind Laschenketten schmal, so dass sie in seitlicher Richtung nicht viel Platz auf dem Reifen benötigen. Sie sind deshalb auch für beengte Einbausituationen gut geeignet, wenn nur wenig Platz zwischen der Seitenwand des Reifens und einem Radkasten des Fahrzeugs vorhanden ist.

Das Laufnetz und/oder die Führungsketten sind bevorzugt aus einem Metallwerkstoff gefertigt. Ein Metallwerkstoff, insbesondere Stahl oder Eisen, ist nicht nur verschleiß- und korrosionsfest, sondern auch vor Ort einfach, beispielsweise durch Schweißen, zu reparieren.

Von Vorteil ist ferner, wenn die Führungsketten Gelenkstellen aufweisen, die in radialer Richtung wenigstens auf Höhe des äußeren Endes der Reifenflanken liegen. Die Gelenkstellen sollten innerhalb des Radius der Reifenmitte liegen, sonst drücken sich die Führungsketten zu stark in den Untergrund. Bevorzugt liegen die Gelenkstellen auf Höhe etwa der Reifenschulter bzw. etwas darunter. Bei dieser Lage der Gelenkstellen treten beim Auflaufen des Laufnetzes auf die Lauffläche der Reifen nur geringe Geschwindigkeitsunterschiede zwischen Laufnetz und Gelenkstellen bzw. Führungsketten und folglich nur geringe Kräfte in Umfangsrichtung im Laufnetz auf.

Eine weitere vorteilhafte Ausgestaltung sieht vor, dass wenigstens eine Führungskette, vorzugsweise beide Führungsketten, in wenigstens einer radialen Richtung selbsttragend sind. Dies bedeutet, dass die Führungsketten nur bis zu einer bestimmten Auslenkung biegeschlaff sind und folglich nicht beispielsweise unter Schwerkrafteinwirkung zusammenfallen können. Die Führungsketten können also insbesondere in einer Richtung, insbesondere in seitlicher Richtung, seitenstabil und damit in dieser Richtung nahezu starr sein. In der radialen Richtung, in der diese Seitenstabilität nicht vorliegt, können die Führungsketten selbsttragend und somit nur begrenzt biegeschlaff sein. Die Gleitschutzkette kann insbesondere unter Schwerkrafteinwirkung eine stabile Eigenform in Gestalt wenigstens eines Kreisbogens in einer senkrecht zu den Radachsen verlaufenden Ebene einnehmen, wenn sie sich selbst trägt. Die Führungsketten bilden bevorzugt das Traggerüst der Gleitschutzkette, an dem das Laufnetz eingehängt ist. Die Eigenstabilität bzw. selbsttragende Eigenschaft ist am einfachsten bei einer Gelenkkette zu realisieren, die nur eindimensional beweglich ist.

Die Führungsketten können unter ihrem Eigengewicht einen Selbsttrageradius einnehmen, der bevorzugt wenigstens so groß ist wie der Durchmesser des äußeren Endes der Reifenflanken unter Berücksichtigung der Stauchung der Reifen an der Reifenaufstandsfläche. Dadurch trägt sich die Gleitschutzkette im montierten Zustand selbst. Das Laufnetz muss keine seitlich wirkenden Kräfte aufnehmen, um die Führungsketten aufzuspannen und am Zusammenfallen zu hindern. Der Selbsttrageradius ist der Radius, auf dem die Führungsketten, insbesondere deren Gelenkstellen, liegen, wenn sie sich selbst tragen.

Gemäß einer weiteren vorteilhaften Ausgestaltung kann der Selbsttrageradius vorzugsweise gemessen an Außenkanten der Führungsketten höchstens so groß sein, wie der Radius der Reifen in der Reifenmitte ohne Berücksichtigung der Stauchung an der Reifenaufstandsfläche. Diese Bemessung ist insofern eine mögliche Obergrenze für den Selbsttragedurchmesser, als ansonsten die Führungsketten zu stark in den Untergrund eingedrückt werden. Bevorzugt entspricht der Selbsttrageradius dem Radius der Reifenschulter im unbelasteten Zustand der Reifen.

Eine in radialer Richtung selbsttragende Führungskette kann auf konstruktiv einfache Weise dadurch geschaffen werden, dass Stützelemente vorgesehen sind, gegen die benachbarte Glieder der Führungskette bei einem Verkippen in wenigstens einer Richtung um einen maximalen Gelenkwinkel schlagen. Ist der maximale Gelenkwinkel bei einer solchen vorteilhaften Ausgestaltung erreicht, ist ein weiteres Verkippen nicht mehr möglich. Die Glieder der Führungskette stützen sich dann aneinander über die Stützelemente ab. Die Führungskette ist bei dieser Ausgestaltung nur so lange biegeschlaff, wie benachbarte Glieder um nicht mehr als den maximalen Gelenkwinkel gegeneinander verkippt sind.

Die Stützelemente können in Form von seitlich bzw. axial vorspringenden Schultern oder Stegen mit radial nach außen und/oder innen weisenden Anschlagflächen ausgestaltet sein. Die Stützelemente können an lediglich jedem zweiten Glied der Führungskette vorgesehen sein.

Sind die Führungsketten durch Gabellaschen- oder Laschenketten gebildet, kann das Stützelement der einen Lasche eine benachbarte Lasche abstützen.

Die Stützelemente befinden sich bevorzugt an der vom Laufnetz weg weisenden Seite einer Führungskette, um die Beweglichkeit der Ketten nicht zu beeinträchtigen. Bei Gabellaschenketten können sich die Stützelemente auch an beiden Seiten der Führungskette befinden, so dass beide Schenkel auf einer Gabellasche abgestützt sind.

Die Stützelemente verhindern das Zusammenfallen der Führungskette und halten sie aufgespannt im Selbsttragedurchmesser. Der maximale Gelenkwinkel zweier aufeinander folgender Glieder der Führungskette kann in Richtung radial nach innen zwischen 10° und 20°, insbesondere um etwa 15°, liegen.

Die Führungskette kann ferner mit Gliedern versehen sein, die radial nach außen vorspringende Führungselemente aufweisen. Die Führungselemente weisen bevorzugt Führungsflächen auf, deren Normalen zur Reifenmitte hin gerichtet sind. Jedes zweite Glied der Führungskette kann mit einem derartigen Führungselement versehen sein. Die Führungsflächen dienen dazu, die Gleitschutzkette an den Reifen auszurichten und die Reifen zwischen den Führungsketten zu halten. Die Führungsflächen können beispielsweise vom radial äußeren Ende der Reifenflanken oder der Reifenschulter in radialer Richtung nach innen vorspringen. Im Betrieb liegen die Führungsflächen bevorzugt an den Reifenflanken und/oder der Reifenschulter an.

Die Glieder der Führungskette, die die Führungsflächen aufweisen, befinden sich bevorzugt an der dem Laufnetz zugewandten Seite der Führungskette, während dazwischen liegende Glieder bevorzugt außen an der vom Laufnetz abgewandten Seite der Führungskette angeordnet sind. Durch diese Maßnahme erhält die Führungskette eine gute Beweglichkeit, da sich die äußeren Kettenglieder bewegen können, ohne am Reifen zu reiben.

Die Führungsflächen können in einer vorteilhaften Weiterbildung in radialer Richtung verlängerten Laschen gebildet sein, wenn als Führungsketten Gelenkketten, insbesondere Laschenketten, verwendet werden.

Gelenkstellen, an denen die Kettenglieder gegeneinander verdrehbar geführt sind, können gemäß einer weiteren vorteilhaften Ausgestaltung einstückig von den Kettengliedern ausgebildet sein. Dies kann auf einfache Weise durch gegossene Kettenglieder realisiert sein. Die Gelenkstellen können als Gelenkfortsätze beispielsweise in Form von Kegelstümpfen ausgebildet sein.

Bei der Verwendung von Gabellaschen können die Gelenkstellen an nur jeweils jedem zweiten Kettenglied angeformt sein. Die Gabellaschen können dabei aus zwei oder mehr Teilkörpern gefertigt sein, die an die beiden beidseits des einen Kettengliedes angeformten Gelenkstellen angesetzt und erst anschließend miteinander zu einer Gabellasche verbunden werden. Die Führungsflächen können gegenüber einer senkrecht zu den Radachsen beziehungsweise parallel zur Umfangsrichtung verlaufenden Ebene geneigt sein, wobei sich in seitlicher Richtung direkt oder schräg gegenüberliegende Führungsflächen eine Reifeneinlaufschräge bilden, die sich in radialer Richtung nach innen erweitert. Der schräge Verlauf der Führungsflächen führt zu einer geringeren Belastung der Seitenwand des Reifens beim Auflaufen der Gleitschutzkette auf den Reifen.

Die Führungselemente, deren Führungsflächen und das Laufnetz bilden einen in radialer Richtung nach innen offenen Reifenaufnahmekanal, in dem der Reifen an drei Seiten geführt ist. Der Reifenaufnahmekanal kann in radialer Richtung nach innen seitlichbreiter werden, so dass die Reifen leichter einlaufen.

Das Laufnetz kann an Befestigungsstellen an den Führungsketten angebracht, insbesondere angeschweißt, sein.

Die Befestigungsstellen liegen gemäß einer Ausgestaltung radial außerhalb der Gelenkstellen. Um zu verhindern, dass das Laufnetz sich im Reifenprofil verfängt, ist es von Vorteil, wenn die Befestigungsstellen sich zumindest außerhalb einer Reifenaufstandsfläche wenigstens auf Höhe der Reifenschulter befinden bzw. in einem Radius liegen, der wenigstens dem Radius der Reifenschulter im Bereich der Reifenaufstandsfläche entspricht. Noch vorteilhafter ist es allerdings, wenn die Befestigungsstellen radial auf Höhe der Gelenkstellen liegen, so dass die Gelenkstellen und die Befestigungsstellen und auf den Befestigungsstellen zumindest der seitliche Rand des Laufnetzes mit gleicher Umfangsgeschwindigkeit umlaufen.

Insbesondere auf wenig tragfähigem Grund reicht die von den Reifen bereitgestellte Auflagefläche manchmal nicht aus, um ein Einsinken zu vermeiden. Gleichermaßen gilt es bei lockeren Böden eine zu große Bodenverdichtung durch die Fahrzeuge zu vermeiden. Beide Probleme können gelöst werden, wenn die Gleitschutzkette eine zusätzliche Aufstandsfläche bereitstellt. Eine Weiterbildung der Erfindung sieht folglich vor, dass die Führungsketten mit einer parallel zur Umfangsrichtung verlaufenden, plattenförmigen Aufstandsfläche versehen sind.

Die Aufstandsfläche erstreckt sich bevorzugt vom Laufnetz weg in seitlicher Richtung nach außen. Die Aufstandsflächen der Glieder der Führungsketten erhöhen die Gesamtaufstandsfläche des Fahrzeugs, so dass der vom Fahrzeug auf den Untergrund ausgeübte Druck sinkt. Dies führt zu einer verringerten Bodenverdichtung sowie zu einem verringerten Einsinken der Gleitschutzkette. Die Aufstandsflächen können an den Kettengliedern ausgebildet sein, an denen sich auch die Führungselemente befinden. Die die Führungselemente bildenden Platten können so einfach an den Aufstandsflächen verlängert sein.

Die Aufstandsfläche kann, beispielsweise wenn eine Gelenk- oder eine Laschenkette verwendet wird, einfach von Winkellaschen gebildet sein. Winkellaschen weisen in Umfangsrichtung betrachtet einen winkelförmigen Querschnitt auf.

Die Aufstandsflächen der Führungskette befinden sich gemäß einer vorteilhaften Ausgestaltung in radialer Richtung wenigstens auf Höhe der Reifenschultern. Ferner können sich die Aufstandsflächen in radialer Richtung höchstens auf Höhe des Radius der Reifenmitte befinden. Befinden sich die Aufstandsflächen in etwa auf Höhe des radial äußeren Endes der Reifenflanken, so stützen sich die Aufstandsflächen nur dann auf dem Untergrund ab, wenn die Reifen bereits etwas eingesunken sind. Bei hartem Untergrund bleibt die Aufstandsfläche ungenutzt und verschleißt weniger. Je weiter die Aufstandsflächen radial nach außen rücken, um so häufiger kommen sie in Kontakt mit dem Untergrund. Um zu vermeiden, dass die Aufstandsflächen immer mit dem Untergrund in Kontakt treten, sollten sie in radialer Richtung nicht jenseits der Reifenmitte liegen.

Die Aufstandsflächen befinden sich in radialer Richtung, bevorzugt jenseits der Gelenkstellen. Sie dienen gleichzeitig als Schutz der Gelenkstellen.

Die Gelenkstellen können Schrauben oder Schraubbolzen insbesondere mit standardisierten Köpfen als Befestigungsmittel und/oder als Achsen enthalten, so dass keine Spezialwerkzeuge zum Demontieren der Führungsketten notwendig sind.

Eine gute Führung der Reifen in der Gleitschutzvorrichtung wird erreicht, wenn das Laufnetz den Abstand zwischen den Führungsketten auf wenigstens die Breite des Reifens im Bereich der Reifenaufstandsfläche begrenzt.

Das Laufnetz ist bevorzugt an denjenigen Gliedern der Führungskette befestigt, an denen sich die Führungsflächen befinden. Die Führungselemente können so zur Befestigung des Laufnetzes mitgenutzt werden.

Die Gleitschutzkette in einer der obigen Ausgestaltungen ist insbesondere für zwei abstandsveränderlich angeordnete Räder, wie sie beispielsweise bei Tandemachsen vorliegen, geeignet. Bei dieser Anordnung sollte besonders darauf geachtet werden, dass die Gelenkstellen bzw. die Führungskette und das Laufnetz mit gleicher Umfangsgeschwindigkeit umlaufen.

Die Erfindung betrifft schließlich ein Fahrzeug mit zwei hintereinander abstandsunveränderlich angeordneten Rädern mit Reifen, insbesondere einer Tandemachse, mit einer Gleitschutzkette in einer der oben beschriebenen Ausgestaltungen.

Im Folgenden ist die Erfindung anhand unterschiedlicher Ausführungsformen beispielhaft mit Bezug auf die Zeichnungen näher erläutert. Nach Maßgabe der obigen Ausführungen können die einzelnen Merkmale der unterschiedlichen Ausführungsformen beliebig miteinander kombiniert werden, wenn es bei bestimmten Anwendungen auf den mit einem Merkmal verknüpften Vorteil nicht ankommen sollte.

In den beigefügten Figuren werden hinsichtlich der Form und/oder Funktion gleichartige Elemente der Einfachheit halber stets dieselben Bezugszeichen verwendet.

Es zeigen:
- Fig. 1: eine schematische, ausschnittsweise Draufsicht auf eine erfindungsgemäßen Gleitschutzkette im aufgezogenen Zustand;
- Fig. 2: eine schematische Seitenansicht in Blickrichtung des Pfeils II der Fig. 1;
- Fig. 3: eine schematische Seitenansicht in Blickrichtung des Pfeils II der Fig. 1 eines Details der Gleitschutzkette;
- Fig. 4: eine weitere Ausführungsform der erfindungsgemäßen Gleitschutzkette in einer schematischen Schnittansicht in Richtung des Pfeils IV der Fig. 2;
- Fig. 5: eine weitere Ausführungsform der erfindungsgemäßen Gleitschutzkette in einer schematischen Schnittansicht in Richtung des Pfeils IV der Fig. 2;
- Fig. 6: eine schematische Seitenansicht einer weiteren Ausführungsform einer Führungskette für die erfindungsgemäße Gleitschutzkette;
- Fig. 7: ein Kettenglied 7 in einer schematischen Perspektivansicht entlang einer Blickrichtung VII der Fig. 6;
- Fig. 8: das Kettenglied in einer Seitenansicht entlang der Blickrichtung VIII der Fig. 6.

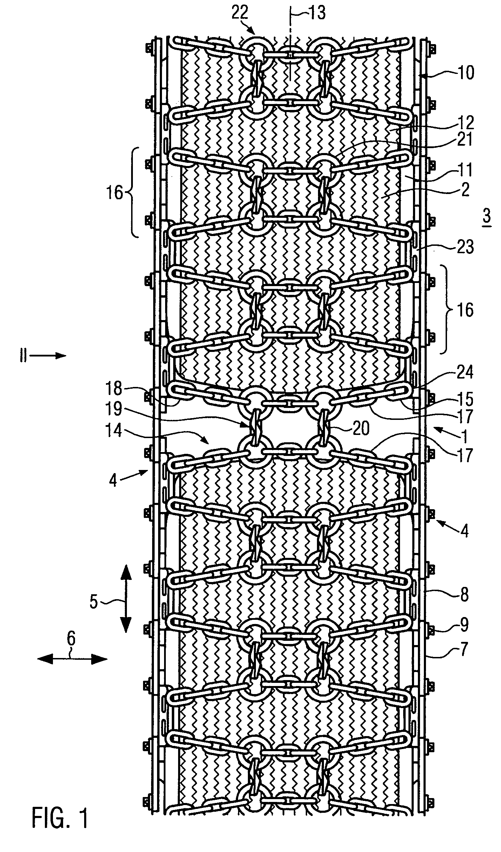

Figur 1 zeigt eine Gleitschutzkette 1 in einer Aufsicht auf schematisch dargestellte Reifen 2 und einen Untergrund 3.

Die Reifen 2 sind auf Räder (in Fig. 1 nicht gezeigt) aufgezogen, die abstandsunveränderlich an einem Fahrzeug (nicht gezeigt) angebracht sind. Der Abstand der Radachsen voneinander bleibt also unabhängig von der Auslenkung der Räder stets konstant. Dies ist beispielsweise bei Tandemachsen der Fall, die bei Fahrzeugen der Forst- und Landwirtschaft zum Einsatz kommen.

Die Gleitschutzkette 1 weist zwei seitliche Führungsketten 4 auf, die vorzugsweise identisch ausgestaltet sind. Die Führungsketten verlaufen im Wesentlichen parallel zueinander in Umfangsrichtung 5, wobei sie zwei geschlossene, in seitlicher Richtung 6 nebeneinander liegende geschlossene Kettenschlaufen bilden. Die Umfangsrichtung 5 folgt dem Verlauf der Führungsketten und ist mit deren Längsrichtung identisch.

Die Führungsketten 4 sind insbesondere Gelenkketten. Wie in Fig. 1 dargestellt ist, können die Führungsketten 4 insbesondere von einer Laschenkette mit Laschen 7, 8, gebildet sein, die an Gelenkstellen 9 miteinander verbunden sind. Die Reifenflanke bildet den profilierten Teil der Seitenwände des Reifens. An einer Reifenschulter 11 geht eine Lauffläche 12 des Reifens 2 in die Seitenwand über. Die Lauffläche 12 der Reifen ist bei Fahrzeugen der Forst- und Landwirtschaft meist sehr grobstollig. Radial zwischen dem äußeren Ende der Reifenflanke 10 und der Reifenschulter 12 erstreckt sich das Profil daher oft bis zur unprofilierten Seitenwand des Reifens. Die Führungsketten 4 befinden sich, wie Fig. 1 zeigt, seitlich der Lauffläche 12, bevorzugt radial auf Höhe der Reifenflanken 10.

Die Führungsketten 4 bzw. die Gelenkstellen 9 befinden sich in radialer Richtung jeweils der Reifenflanke 11, in etwa auf oder etwas unterhalb der Höhe der Reifenschulter 11, zumindest jedoch innerhalb des Radius der Reifenmitte 13, der oftmals größer als der Radius der Reifenschulter ist. Die Führungsketten 4 liegen seitlich vorzugsweise locker am Reifen an.

Zwischen den beiden Führungsketten 4 erstreckt sich in seitlicher Richtung 6 ein biegeschlaffes Laufnetz 14, das im Betrieb zwischen der Lauffläche 12 und dem Untergrund 3 zu liegen kommt. Bevorzugt befindet sich ausschließlich das Laufnetz 14 zwischen Reifen 2 und Untergrund 3, um den Verschleiß der Führungsketten 4 möglichst gering zu halten.

Das Laufnetz 14 weist Kettenstränge 15 auf, oder besteht aus derartigen Kettensträngen, und ist bevorzugt in Leiterabschnitte 16 in Umfangsrichtung 5 unterteilt. Die Leiterabschnitte 16 sind in Umfangsrichtung 5 unabhängig voneinander, weil sie lediglich über die Führungsketten 4 miteinander verbunden sind. Auf diese Weise kann das Laufnetz 14 eine in Umfangsrichtung 5 wirkende Kraft nur innerhalb eines Leiterabschnitts 16 übertragen. Die in Umfangsrichtung 5 wirkende Kraft wird an die benachbarten Leiterabschnitte 16 nicht über das Laufnetz 14 übertragen, so dass das Laufnetz sich im Betrieb leichter anpassen und ohne zu verspannen auf die Reifen 2 auflaufen kann.

Die Leiterabschnitte 16 erstrecken sich vorzugsweise durchgängig von der einen Führungskette 4 zu der gegenüberliegenden anderen Führungskette 4. Sie können aus einem oder mehreren Leitersträngen 17, im einfachsten Fall aus einem einzigen Leiterstrang 17, gebildet sein. Als Leiterstrang wird dabei ein sich quer zur Umfangsrichtung, vorzugsweise durchgängig von der einen zur anderen Führungskette 4 erstreckender Kettenstrang bezeichnet, der jedoch nicht aus gleichartigen Kettengliedern 18 aufgebaut sein muss.

Lediglich beispielhaft ist in Fig. 1 ein Leiterabschnitt aus zwei parallelen Leitersträngen 17 gezeigt, die zu einer x-förmigen Konfiguration verbunden sind. Auch andere, beispielsweise o-förmige Konfigurationen sind möglich.

Die Leiterabschnitte 16 können wenigstens ein Spurstück 19 aufweisen, das sich in Umfangsrichtung erstreckt, bzw. wenigstens eine in Umfangsrichtung 5 verlaufende, mit dem Untergrund 3 in Eingriff gelangende Spurkante 20 aufweisen. Die Spurstücke 19 können von in Umfangsrichtung verlaufenden auf der Lauffläche 12 des Reifens stehenden Kettengliedern gebildet sein. Die Spurkanten 20 können an beliebigen Kettengliedern 18, insbesondere den Spurstücken, ausgebildet sein. Die Spurstücke 19 bzw. Spurkanten 20 erhöhen die Spurtreue der Gleitschutzkette 1.

Bei der speziellen Ausgestaltung der Fig. 1 sind zwei Spurkanten 20 beidseits der Reifenmitte 13 vorgesehen. Die Spurstücke 19 sind in wenigstens einem Ringglied 21 eingehängt, die einen im Wesentlichen rechteckigen Unterabschnitt 22 des Laufnetzes bilden.

Die Führungsketten 4 weisen ferner Halteelemente 23 auf, an denen das Laufnetz 14 befestigt ist. Die Halteelemente 23 können plattenförmig ausgestaltet sein und in radialer Richtung gegenüber den Gelenkstellen 9 nach außen vorspringen.

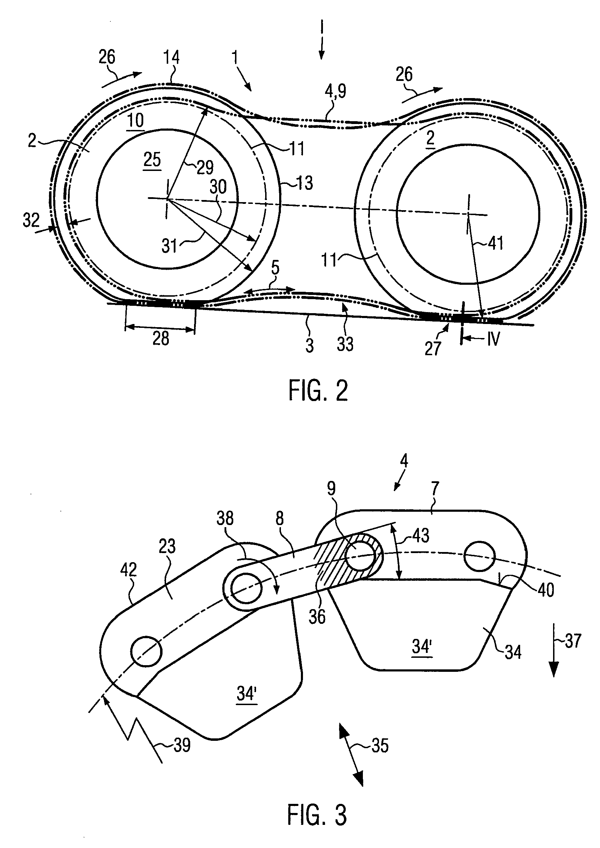

Fig. 2 zeigt die Ansicht II der Fig. 1. Pfeil I in Fig. 2 zeigt die Blickrichtung der Fig. 1.

Die Gleitschutzkette 1 ist in Fig. 2 lediglich in strichpunktierten Linien wiedergegeben, wobei die doppelt strichpunktierte Linie die Lage des Laufnetzes 14 im Bereich der Reifenmitte und die dreifach strichpunktierte Linie den Verlauf der Führungsketten 4, insbesondere der Gelenkstellen 9 der Führungsketten 4, andeuten. Die Räder 25 mit den Reifen 2 drehen sich in einer Drehrichtung 26.

Die Lage der Reifenschultern 11 ist durch eine gestrichelte Linie gekennzeichnet, das radial äußere Ende der Reifenflanken durch eine einfach strichpunktierte Linie. Im Bereich der Reifenaufstandsfläche 27 ist der Reifen gestaucht, so dass es zu einer Abplattung kommt, die sich in Umfangsrichtung 5 über eine Länge 28 erstreckt. Die Leiterabschnitte 16 erstrecken sich vorzugsweise in Umfangsrichtung 5 höchstens über die Länge 28 der Reifenaufstandsfläche 27, so dass beim Durchlauf durch die Reifenaufstandfläche hervorgerufene Kräfte im Laufnetz in Umfangsrichtung nur über einen begrenzten Abschnitt wirken.

Wie in Fig. 2 ferner zu erkennen ist, liegen die Führungsketten 4 bzw. deren Gelenkstellen 9 auf einer radialen Position 29, die zumindest außerhalb der Reifenaufstandsfläche 27 außerhalb einer radialen Position 29' der äußeren Enden der Reifenflanken im Bereich der radialen Position 30 der Reifenschulter 11, und innerhalb etwa der radialen Position 31 der Reifenmitte 13 liegt. Die Befestigungsstellen 24 befinden sich in einem radialen Bereich 32, der sich von der radialen Position 29 der Gelenkstellen bis zur radialen Position 31 der Reifenmitte erstreckt. Die Befestigungsstellen 24 liegen bevorzugt auf einem größeren Durchmesser als die Gelenkstellen 9 zumindest auf der Höhe 20 der Reifenschulter 11.

An Befestigungsstellen 24 ist das Laufnetz 14 mit den Führungsketten 4 verbunden, beispielsweise verschweißt. Die Befestigungsstellen 24, an denen das Laufnetz 14 an den Führungsketten 4 befestigt ist, befinden sich zumindest außerhalb der Reifenaufstandsfläche 27 jeweils bevorzugt in radialer Richtung der jeweiligen Reifenschulter. Die Befestigungsstellen 24 sollten nicht außerhalb des Radius der Reifenmitte 13 liegen. In seitlicher Richtung 6 können die Halteelemente 23 bzw. die Befestigungsstellen 24 zumindest außerhalb des Bereichs der Reifenaufstandsfläche vom Reifen 2 beabstandet sein. Dies verhindert einen erhöhten Verschleiß der Reifen und der Führungsketten und lässt ausreichend Platz für die Stauchung und Ausbuchtung des Reifens im Bereich der Reifenaufstandsfläche, an der der Reifen 2 auf dem Untergrund 3 aufliegt.

Die relative Lage der Führungsketten 4 und der Reifenschulter 11 verändert sich bei belastetem Reifen aufgrund der Stauchung an der Reifenaufstandsfläche, insbesondere wenn die Führungsketten 4 auf dem Untergrund 3 aufliegen: Im Betrieb ist der Mittelpunkt des von den Führungsketten 4 gebildeten Teilkreises gegenüber dem Radmittelpunkt nach oben versetzt, denn der Untergrund drückt die Führungsketten nach oben. Bewegen sich die Räder, so sind die Mittelpunkte der Führungsketten entgegen der Bewegungsrichtung des Fahrzeugs und hinten gegenüber den Mittelpunkten versetzt. Aufgrund der unterschiedlichen Mittelpunkte der Führungsketten und der Reifen sind hier nur die radialen Positionen, nicht die Radien, miteinander verglichen.

Das Laufnetz 14 ist in seitlicher Richtung 6 vorzugsweise nicht gespannt und hängt im Bereich 33 zwischen den Reifen 2 an der Oberseite durch. Am Untergrund 3 wird es zwischen den Reifen meist etwas nach oben gedrückt, wie Fig. 2 schematisch zeigt. Aufgrund der größeren Beweglichkeit des Laufnetzes 14 gegenüber den Führungsketten weichen die Bewegungsbahnen der Führungskette 4 und des Laufnetzes 14 bei ihrem Umlauf um die beiden Reifen 2 und dem dazwischen liegenden Bereich 33 voneinander ab. Die abweichenden Bewegungsbahnen folgen unterschiedlichen radialen Positionen, so dass die Führungsketten 4 und das Laufnetz 14 sowie unterschiedliche Teile des Laufnetzes unterschiedliche Umfangsgeschwindigkeiten aufweisen. Die radialen Positionen der Gelenkstellen 9 und der Befestigungsstellen 24 sollen möglichst nahe beieinander liegen, so dass die Unterschiede in den Umfangsgeschwindigkeiten möglichst gering sind und nicht zu einer übermäßig starken Belastung des Laufnetzes führen.

Fig. 3 zeigt einen Ausschnitt einer Führungskette 4 entlang der Ansicht II der Fig. 1. Lediglich beispielhaft ist die Führungskette 4 als Laschenkette dargestellt. Der Ausdruck "Laschen" wird im Folgenden stellvertretend für Kettenglied verwendet. So können anstelle der in Fig. 3 dargestellten Laschen 7, 8 auch anders geformte Kettenglieder verwendet werden, beispielsweise können die Laschen 8 von Gabellaschen gebildet sein.

Wie Fig. 3 zeigt, sind einzelne Laschen 7, vorzugsweise jede zweite Lasche, mit Führungselementen 34 versehen, die sich in radialer Richtung 35 nach innen erstrecken und insbesondere plattenförmig ausgestaltet sein können. Die Führungselemente 34 liegen bevorzugt mit Führungsflächen 34' an den Reifenflanken 10 (vgl. Fig. 1, 2) auf. Die Führungselemente 34 der beiden Führungsketten 4 können sich in Seitenrichtung 6 jeweils direkt oder schräg gegenüber liegen. Sie dienen dazu, dass sich der Reifen beim Auflaufen der Gleitschutzkette 1 selbsttätig zwischen den Führungsketten 4 zentriert. Um das Auflaufen und Zentrieren des Reifens zu vereinfachen, können die Führungsflächen 34' gegenüber der radialen Richtung 35 geneigt sein, wobei sich radial nach innen der Abstand zwischen sich gegenüber liegenden Führungsflächen 34' vergrößert.

Ferner zeigt Fig. 3, dass die Führungskette 4 seitenstabil und selbsttragend ist. Die Seitenstabilität führt dazu, dass die Führungskette 4 in Seitenrichtung 6 nicht biegeschlaff ist, sondern die Glieder der Führungskette relativ zueinander allenfalls um einen geringen Betrag beweglich sind, bevor sie aneinanderschlagen. Die Seitenstabilität wird bei einer Laschenkette beispielsweise dadurch erreicht, dass sich die Laschen 7, 8 in Seitenrichtung 6 in einem Bereich 36, der in Fig. 3 schraffiert dargestellt ist, überlappen. In Seitenrichtung 6 kann etwas Spiel in den Gelenkstellen 9 vorhanden sein, so dass die Führungskette 4 in dieser Richtung etwas nachgibt. Schlagen die Laschen 7, 8 im Überlappungsbereich 36 gegeneinander, blockiert die Führungskette 4. Die Seitenstabilität der Führungsketten 4 führt zu einer Formstabilität der gesamten Gleitschutzkette 1.

Die Führungskette 4 ist ferner in wenigstens einer radialen Richtung 35 selbsttragend. Dies bedeutet, dass sie in einer senkrecht zur Umfangsrichtung liegenden Ebene ebenfalls nicht vollständig biegeschlaff ist und insbesondere in wenigstens einer Schwenkrichtung 38 der Laschen 7, 8 nicht unter Einwirkung der Schwerkraft 37 zusammenfällt, sondern einen Selbsttrageradius 39 einnimmt. Der Selbsttrageradius 39 wird durch die radiale Position der Gelenkstellen bestimmt.

Die selbsttragende Eigenschaft der Führungskette wird dadurch erreicht, dass in der einen Schwenkrichtung 38 ein beispielsweise in Form eines Anschlages ausgebildetes Stützelement 40 vorhanden ist, der die relative Beweglichkeit der Laschen 7, 8 um die Gelenkstellen 9 zueinander begrenzt. Das Stützelement 40 kann von einem in Seitenrichtung vorspringenden Absatz, beispielsweise einer radial nach außen oder innen weisenden Schulter oder einem entsprechenden Steg gebildet sein.

Der Selbsttrageradius 39 ist bevorzugt wenigstens so groß wie ein äußerer Radius 41 (Fig. 2) der Reifenflanke an der Reifenaufstandsfläche 28. Dieser Radius ist kleiner als der Radius bei unbelasteten Reifen. Der Selbsttrageradius 39 ist also vorzugsweise so bemessen, dass sich im Betrieb der Gleitschutzkette 1 die Führungsketten 4 im Bereich der Reifen 2 selbst und auch das Laufnetz 14 tragen. Um jedoch zu verhindern, dass radial außen liegende Kanten 42 der Führungsketten 4 in den Untergrund 3 gedrückt werden, verlaufen die radialen Außenkanten 42 bevorzugt in einem Radius, der kleiner ist als der Radius 31 (Fig. 2) der Reifenmitte, vorzugsweise kleiner als der Radius 41' der Reifenaufstandsfläche. Der Radius, auf dem die Befestigungsstellen 24 im selbsttragenden Zustand der Führungsstellen liegen, entspricht mindestens dem Radius 41' der Reifenschulter 12 und höchstens dem Radius der Reifenmitte.

Die Verbindungslinie zwischen aufeinanderfolgenden Gelenkstellen ist im Selbsttrageradius jeweils um einen maximalen Gelenkwinkel 43 versetzt. Der Winkel 43 beträgt zwischen 10° und 20°.

Das Stützelement 40 und die Laschen 8 zwischen den Laschen 7 und den Führungselementen liegen bevorzugt an der vom Laufnetz 14 abgewandten Seite der Führungskette.

Durch den Selbsttrageradius 39 wird verhindert, dass die Führungsketten 4 gegenüber der Lauffläche der Reifen auf einem zu geringen Radius liegen und zwischen den Führungsketten 4 und dem Laufnetz ein zu großer Geschwindigkeitsunterschied entsteht.

Bei der in Fig. 3 dargestellten Lasche ist das Halteelement 23, an dem das Laufnetz 14 an den Führungsketten befestigt ist, von dem in radialer Richtung nach außen vorspringenden Halteelementen 23 der Laschen 7, 8 gebildet.

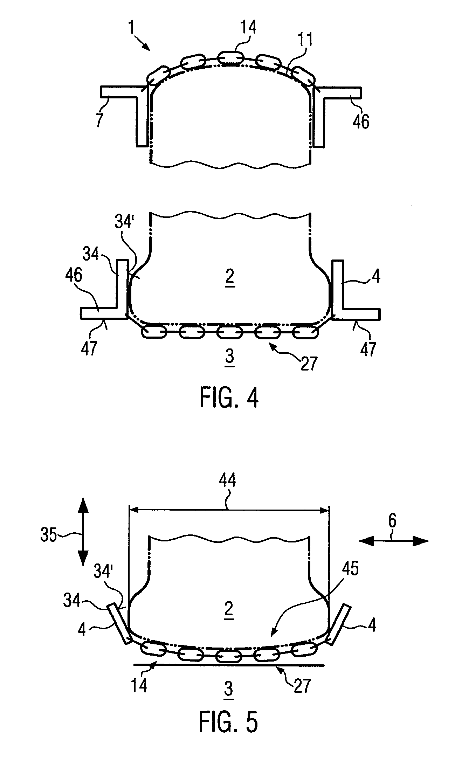

Fig. 4 zeigt eine schematische Schnittdarstellung durch den Reifen 2 entlang des Pfeils IV der Fig. 2 im Bereich der Reifenaufstandsfläche 27.

Wie zu erkennen ist, wölbt sich der Reifen an der Reifenaufstandsfläche 27 seitlich nach außen, so dass er an dieser Stelle verbreitert ist. Der Mindestabstand 44 der Führungsketten, der durch die Breite des Laufnetzes 14 in Seitenrichtung 6 bestimmt ist, ist so bemessen, dass der Reifen 2 auch an der Reifenaufstandsfläche 27 zwischen den Führungsketten 4, insbesondere deren Führungsflächen 34', aufgenommen werden kann. Die Breite eines von der Gleitschutzkette 1 gebildeten Aufnahmekanals, der in Seitenrichtung 6 von den Führungsketten 4 in radialer Richtung außen vom Laufnetz 14 begrenzt ist, entspricht also wenigstens der Breite in Seitenrichtung 6 des Reifens 2 an der Reifenaufstandsfläche 27.

In Fig. 4 ist ferner zu erkennen, dass sich der Reifenaufnahmekanal 45 in radialer Richtung 35 nach innen erweitert, so dass der Reifen 2 sich beim Auflaufen der Gleitschutzkette 1 leichter selbsttätig zentriert. Dies kann dadurch erreicht werden, dass die Führungselemente 34 (Fig. 3) gegenüber den Achsen der Gelenkstellen 9 geneigt verlaufen.

Fig. 5 zeigt eine weitere Ausführungsform einer Gleitschutzkette 1. Bei dieser Ausführungsform ist die Aufstandsfläche durch die Gleitschutzkette 1 vergrößert. Hierzu bildet die Gleitschutzkette 1 Aufstandselemente 46 aus, die sich in seitlicher Richtung 6, vorzugsweise parallel zur Umfangsrichtung 5 vom Reifen 2 weg, erstrecken. Dies kann beispielsweise durch winkelförmige Laschen 7 erreicht werden. Die Aufstandselemente bilden radial nach außen weisende Aufstandsflächen 47. Bei weichem Untergrund, etwa wenn der Reifen 2 in den Untergrund 3 einsinkt, liegen die Aufstandselemente 46 auf dem Untergrund 3 auf und vergrößern so die gesamte Aufstandsfläche von Reifenaufstandsfläche 27 und Gleitschutzkette 1.

Die Aufstandselemente 46 können insbesondere plattenförmig ausgestaltet sein und eine radiale Position aufweisen, wie sie oben im Zusammenhang mit den radialen Außenkanten 42 bei Fig. 3 beschrieben ist. Sie liegen an einer radialen Position, die sich von der Lage der Reifenschulter an der Reifenaufstandsfläche, also auf Höhe des Radius 41, bis zur radialen Position 31 der Reifenmitte 14 erstrecken kann. Je weiter außen die Aufstandsflächen 47 liegen, um so eher kommen sie in Kontakt mit dem Untergrund.

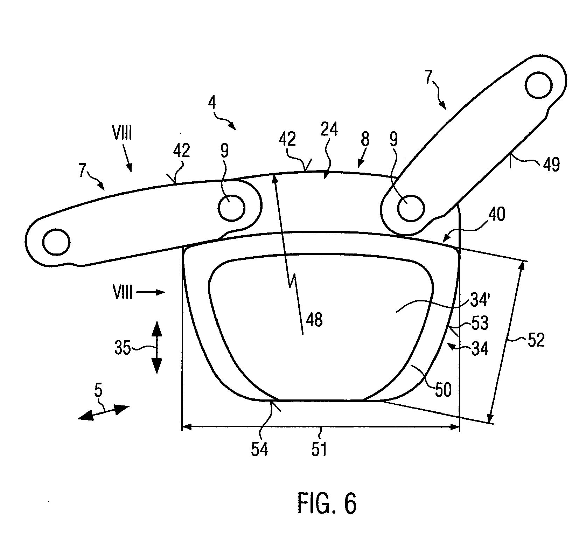

Fig. 6 zeigt eine schematische Seitenansicht einer weiteren Ausführungsform einer Führungskette 4. Bei dieser Ausführungsform befinden sich die Befestigungsstellen 24 zwischen den Gelenkstellen 9. Dadurch wird das Laufnetz (nicht gezeigt) auf derselben radialen Höhe wie die Gelenkstellen 9 gehalten. Dies führt zu besonders geringen Unterschieden in den Umfangsgeschwindigkeiten von Laufnetz und Führungskette 4.

Die radialen Außenkanten 42 sind bei dieser Ausführungsform bevorzugt konkav gekrümmt. Ein Krümmungsradius 48 der radialen Außenkanten 42 kann dem Radius 30 der Reifenschulter 11 entsprechen.

Das Stützelement 40 kann, wie bei dem vorstehend beschriebenen Ausführungsbeispiel ebenfalls als seitlich vorspringende Schulter ausgestaltet sein. Die Kontur des Stützelements folgt bevorzugt der Kontur einer radialen Innenkante 49 derjenigen Kettenglieder 7, die sich an den Stützelementen 40 abstützen. Sind, wie beim Ausführungsbeispiel der Fig. 6, die radialen Innenkanten 49 leicht gekrümmt, vorzugsweise parallel zu den Außenkanten 42, so kann auch das Stützelement 40 eine Krümmung in Umfangsrichtung aufweisen. Nimmt die Führungskette den Selbsttrageradius ein, schmiegen sich die Innenkanten 49 an die Schulter 40 und liegen vollflächig auf den Schultern 40.

Das Führungselement 34 kann zur Versteifung der Führungsfläche 34' eine oder mehrere Rippen 50 aufweisen, die sich bevorzugt in radialer Richtung nach innen erstrecken.

Ein guter Sitz der Gleitschutzkette lässt sich erreichen, wenn eine Breite 51 des Führungselements 34 in Umfangsrichtung 5 größer ist als dessen Höhe 52 in radialer Richtung 35. Die radiale Breite 51 ist bevorzugt größer als der Abstand der Stollen des jeweiligen Reifens, so dass die Führungselemente 34 nicht zwischen den Stollen verhaken können, wenn sich das Profil der Reifen bis zur Seitenwand der Reifen erstrecken sollte.

Um einen allmählichen Kontakt des Führungselements 34 mit dem Reifen beim Umlauf der Gleitschutzkette zu ermöglichen, verringert sich die Breite 51 des Führungselements 34 mit zunehmendem Abstand von den Gelenkstellen 9. Die in Umfangsrichtung 5 liegenden Kanten 53 sind insbesondere in radialer Richtung zunehmend in Umfangsrichtung 5 gekrümmt und laufen in einem Radius zu einer radial innen liegenden Kante 54 aus. Die radiale Innenkante 54 kann ebenfalls gekrümmt sein.

Bei der Führungskette 4 in der Ausführungsform gemäß Fig. 6 wechseln sich laschenförmige Kettenglieder 7 ohne Führungselemente 34 mit ebenfalls laschenförmigen Kettengliedern 8 ab, die mit Führungselementen 34 versehen sind.

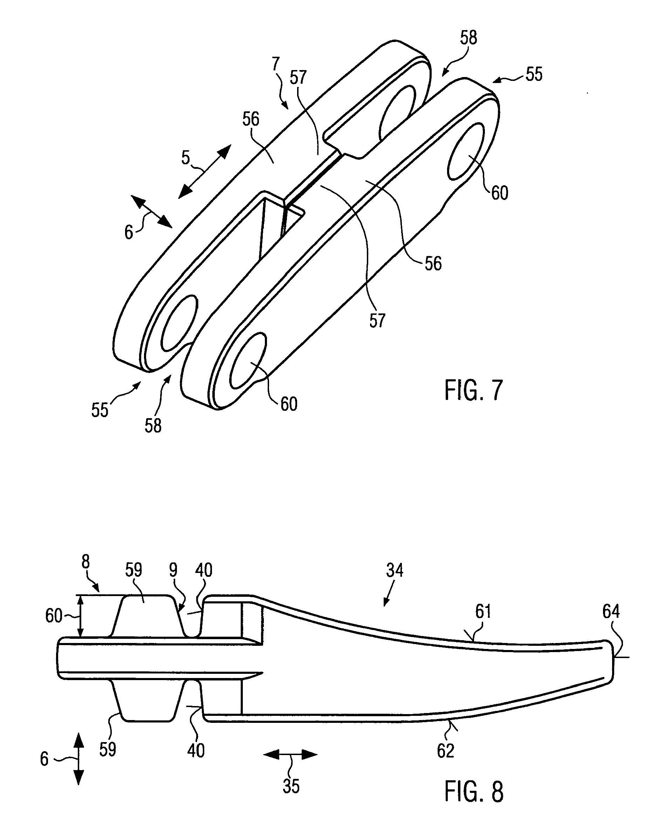

Fig. 7 zeigt ein Kettenglied 7 in einer schematischen Perspektivansicht entlang einer Blickrichtung VII der Fig. 6.

Die Kettenglieder 7 sind als Gabellaschen ausgebildet, deren beide in Umfangsrichtung 5 gelegenen Enden 55 gabelförmig ausgestaltet sind. Wie Fig. 7 zeigt, können die Kettenglieder 7 aus zwei identischen oder spiegelverkehrt ausgestalteten, aneinandergesetzten Laschenkörpern 56 aufgebaut sein. Die Laschenkörper 56 können beispielsweise miteinander verschweißt sein. Selbstverständlich kann das Kettenglied 7 auch als Gussteil einteilig ausgestaltet sein. Im Falle einer zweiteiligen Ausgestaltung weisen die Laschenkörper 56 zentrale, sockelförmige Abstandselemente 57 auf, deren Stirnflächen als Befestigungsflächen benutzt werden können.

An den Enden 55 befindet sich jeweils eine einseitig in Umfangsrichtung 5 offene Laschenaufnahme 58, die zur Aufnahme des Kettengliedes 8 dient und die seitlich von den Schenkeln der Gabellasche begrenzt ist.

Fig. 8 zeigt das Kettenglied in einer Seitenansicht entlang der Blickrichtung VIII der Fig. 6.

Wie zu erkennen ist, sind die Gelenkstellen 9 bevorzugt einstückig als achsstummelförmige Gelenkfortsätze 59 ausgestaltet, die in Seitenrichtung 6 vorspringen. Die Gelenkfortsätze weisen in Ebenen senkrecht zur Seitenrichtung 6 bevorzugt einen kreisförmigen Querschnitt auf und können insbesondere kegelstumpfförmig ausgebildet sein. Der Durchmesser der Gelenkfortsätze 59 verringert sich dabei in seitlicher Richtung 6 mit zunehmender Höhe. Eine Höhe 60 in Seitenrichtung 6 der Gelenkfortsätze 59 ist so bemessen, dass sie nicht über die Höhe der Schultern 40 in Seitenrichtung 6 hervorragen.

Die Materialstärke des Führungselements 34 kann in radialer Richtung 35 mit zunehmendem Abstand von den Gelenkstellen 9 abnehmen.

Wie Fig. 8 zeigt, sind an den beiden in Seitenrichtung 6 gegenüberliegenden Seiten eines Kettengliedes 8 die Gelenkstellen 9 jeweils paarweise angeordnet, so dass sie in Eingriff mit den jeweiligen Gabelenden der Kettenglieder 7 gemäß Fig. 7 gelangen.

Gelenköffnungen 60 der Kettenglieder 7 (vgl. Fig. 7) können eine zur Außenkontur der Gelenkstellen 9 bzw. Gelenkfortsätze 59 komplementär ausgestaltete Innenkontur aufweisen. Im Falle des Ausführungsbeispiels der Fig. 6 bis 8 bedeutet dies, dass die Innenkonturen der Gelenköffnungen 60 komplementär zur Kegelstumpfform der Gelenkstellen 9 kegelmantelförmig ausgestaltet sind und sich in seitlicher Richtung 6 nach außen hin verjüngen.

Bei der Ausführungsform der Fig. 6 bis 8 werden die Laschenkörper 56 bei der Montage der Führungskette 4 zunächst getrennt an die beiden Seiten eines Kettengliedes 6 angelegt und die Gelenkfortsätze 59 in die Gelenköffnungen 60 eingesetzt. Ist dies an beiden Enden 55 des Kettengliedes 7 erfolgt, werden anschließend die beiden Laschenkörper 56 miteinander verbunden, beispielsweise verschweißt, verklebt oder verschraubt. Damit sind die Kettenglieder 7, 8 zusammengefügt.

Selbstverständlich kann auch auf den Gelenkfortsatz 59 verzichtet werden und statt dessen ein separater Bolzen verwendet werden. Ein solcher Bolzen kann durch Schrauben oder durch eine plastische Verformung, beispielsweise durch Anstauchung von Köpfen, verliersicher in der Führungskette 4 gehalten sein.

Aufgrund der Verwendung von gabelförmigen Kettengliedern 7 sind, wie Fig. 8 zeigt, auch Stützelemente 40 zu beiden Seiten vorgesehen, so dass sich jeweils die beiden gabelförmigen Enden eines Kettengliedes 7 abstützen können. Dies erhöht die Tragfähigkeit der Führungskette 7 im selbsttragenden Zustand.

Das Kettenglied 8 bzw. das Führungselement 34 muss nicht symmetrisch ausgestaltet sein. Eine in Seitenrichtung 6 innen liegende, dem Laufnetz 14 (nicht gezeigt) zugewandten Innenseite 61 kann konkav gekrümmt sein, um der Außenkontur einer Seitenwand des Reifens besser folgen zu können. Eine Außenseite 62 des Führungselements 34 an der vom Laufnetz abgewandten Seite des Kettengliedes 8 kann konvex, zur Innenseite 61 hin gekrümmt sein. Eine solche Krümmung zum Reifen hin verringert die Gefahr, dass die Führungskette 4 bzw. deren Führungselemente 34 in seitlicher Richtung 6 zu weit vom Reifen abstehen, was die Verletzungs- und Beschädigungsgefahr erhöhen kann. Die konvexe bzw. konkave Krümmung verstärkt sich bevorzugt in Richtung der radialen Innenkante 54.

Obwohl die Gleitschutzkette 1 in den Ausführungsbeispielen ausschließlich in Zusammenhang mit einem Räderpaar beschrieben ist, kann sie auch an lediglich einem Reifen montiert sein. Die oben genanten Bemessungsregeln gelten bei dieser Variante fort.

### Bezugszeichen

- 1: Gleitschutzkette
- 2: Reifen
- 3: Untergrund
- 4: Führungsketten
- 5: Umfangsrichtung
- 6: Seitenrichtung
- 7: Lasche der Führungskette
- 8: Lasche der Führungskette
- 9: Gelenkstelle der Führungskette
- 10: Reifenflanke
- 11: Reifenschulter
- 12: Lauffläche des Reifens
- 13: Reifenmitte
- 14: Laufnetz
- 15: Kettenstränge des Laufnetzes
- 16: Leiterabschnitte des Laufnetzes
- 17: Leiterstränge des Laufnetzes
- 18: Kettenglied
- 19: Spurstücke des Laufnetzes
- 20: Spurkanten des Laufnetzes
- 21: Ringglied
- 22: rechteckiger Unterabschnitt
- 23: Halteelemente
- 24: Befestigungsstellen
- 25: Räder
- 26: Drehrichtung
- 27: Reifenaufstandsfläche
- 28: Länge der Reifenaufstandsfläche
- 29: radiale Position der Führungskette bzw. Gelenkstellen
- 29': radiale Position des äußeren Endes der Reifenflanke
- 30: radiale Position der Reifenschulter
- 31: radiale Position der Reifenmitte
- 32: radialer Bereich für die Position der Befestigungsstellen
- 33: Bereich zwischen den Reifen
- 34: Führungselemente
- 34': Führungsflächen
- 35: radiale Richtung
- 36: Überlappungsbereich
- 37: von Führungskette aufgespannte Ebene
- 38: Schwenkrichtung
- 39: Selbsttrageradius
- 40: Stützelement
- 41: Radius der Reifenschulter an der Reifenaufstandsfläche
- 41': Radius der Reifenaufstandsfläche
- 42: radiale Außenkanten
- 43: Winkel
- 44: Abstand zwischen Führungsketten
- 45: Reifenaufnahmekanal
- 46: Aufstandselemente
- 47: Aufstandsflächen
- 48: Krümmungsradius
- 49: radiale Innenkante
- 50: Versteifungsrippen
- 51: Breite in Umfangsrichtung des Führungselements
- 52: Höhe in radialer Richtung des Führungselements
- 53: in Umfangsrichtung liegende Kante
- 54: radiale Innenkante
- 55: Enden
- 56: Laschenkörper
- 57: Abstandselement
- 58: Laschenaufnahme
- 59: Gelenkfortsatz
- 60: Gelenköffnungen
- 61: Innenseite des Führungselements
- 62: Außenseite des Führungselements

## Patentansprüche

1. Gleitschutzkette (1) zur Anbringung an wenigstens einem Reifen (2), wobei die Gleitschutzkette (1) zwei seitliche, seitenstabile Führungsketten, die im montierten Zustand seitlich der Laufflächen (12) der Reifen (2) angeordnet sind, und ein biegeschlaffes Laufnetz (14), das sich zwischen den beiden Führungsketten (4) erstreckt, aufweist.

2. Gleitschutzkette (1) nach Anspruch 1, **dadurch gekennzeichnet, dass** das Laufnetz (14) Leiterabschnitte (16) aufweist, die mit dem übrigen Laufnetz (14) ausschließlich über die Führungsketten (4) verbunden sind.

3. Gleitschutzkette (1) nach Anspruch 1 oder 2, **dadurch gekennzeichnet, dass** das Laufnetz (14) Leiterabschnitte (16) aufweist, die sich durchgängig von der einen zu der anderen Führungskette erstrecken.

4. Gleitschutzkette (1) nach einem der Ansprüche 1 bis 3, **dadurch gekennzeichnet, dass** das Laufnetz (4) mit Spurkanten (20) versehene Leiterabschnitte (16) aufweist, wobei sich die Spurkanten (20) in Umfangsrichtung (5) erstrecken.

5. Gleitschutzkette (1) nach einem der Ansprüche 1 bis 4, **dadurch gekennzeichnet, dass** das Laufnetz (14) von den Führungsketten (4) zusammengehalten ist.

6. Gleitschutzkette (1) nach einem der Ansprüche 1 bis 5, **dadurch gekennzeichnet, dass** die Leiterabschnitte (18) sich in Umfangsrichtung (5) über nicht mehr als die Länge (28) der Reifenaufstandsfläche (27) in Umfangsrichtung (5) erstrecken.

7. Gleitschutzkette (1) nach einem der Ansprüche 1 bis 6, **dadurch gekennzeichnet, dass** die Führungsketten (4) als Laschenketten ausgestaltet sind.

8. Gleitschutzkette (1) nach einem der Ansprüche 1 bis 7, **dadurch gekennzeichnet, dass** die Führungsketten (4) Gelenkstellen (9) aufweisen, die im montierten Zustand wenigstens auf Höhe des radial äußeren Endes der Reifenflanke (10) liegen.

9. Gleitschutzkette (1) nach einem der Ansprüche 1 bis 8, **dadurch gekennzeichnet, dass** wenigstens eine Führungskette (4) selbsttragend ausgestaltet ist.

10. Gleitschutzkette (1) nach einem der Ansprüche 1 bis 9, **dadurch gekennzeichnet, dass** die Führungsketten (4) unter ihrem Eigengewicht wenigstens abschnittsweise kreisbogenförmig in einem Selbsttrageradius (39) verlaufen.

11. Gleitschutzkette (1) nach Anspruch 10, **dadurch gekennzeichnet, dass** der Selbsttrageradius (39) wenigstens so groß ist wie der äußere Radius der Reifenflanke (10) unter Berücksichtigung der Stauchung an der Reifenaufstandsfläche (27).

12. Gleitschutzkette (1) nach Anspruch 10 oder 11, **dadurch gekennzeichnet, dass** der Selbsttrageradius (39)höchstens so groß ist wie der Radius (31) der Reifenmitte (13) ohne Berücksichtigung der Stauchung an der Reifenaufstandsfläche (27).

13. Gleitschutzkette (1) nach einem der Ansprüche 1 bis 12, **dadurch gekennzeichnet, dass** die Führungsketten (4) Stützelemente (40) aufweisen, gegen die benachbarte Glieder (7, 8) der Führungsketten (4) bei Verkippen (38) um einen maximalen Gelenkwinkel (43) schlagen.

14. Gleitschutzkette (1) nach einem der Ansprüche 1 bis 13, **dadurch gekennzeichnet, dass** die Führungsketten (4) mit Gliedern (7, 8) versehen sind, die in radialer Richtung (35) nach innen vorspringende Führungselemente (34) ausbilden.

15. Gleitschutzkette (1) nach einem der Ansprüche 1 bis 14, **dadurch gekennzeichnet, dass** die Führungsketten (4) laschenförmige Glieder (7, 8) aufweisen, die einen sich vom Laufnetz (14) in radialer Richtung (35) nach innen erweiternden Reifenaufnahmekanal (45) bilden, der in seitlicher Richtung (6) von der Führungskette (4) und in radialer Richtung (35) außen vom Laufnetz (14) begrenzt ist.

16. Gleitschutzkette (1) nach einem der Ansprüche 1 bis 15, **dadurch gekennzeichnet, dass** die Führungskette (4) Glieder (7, 8) mit einer parallel zur Umfangsrichtung (5) verlaufenden, im Wesentlichen ebenen Aufstandsflächen (47) aufweist, wobei sich die Aufstandsfläche in seitlicher Richtung (6) vom Reifen weg erstreckt.

17. Gleitschutzkette (1) nach einem der Ansprüche 1 bis 16, **dadurch gekennzeichnet, dass** das Laufnetz (14) den Abstand (44) zwischen den Führungsketten (4) auf wenigstens die Breite des Reifens (2) im Bereich der Reifenaufstandsfläche (27) begrenzt.

18. Gleitschutzkette (1) nach einem der Ansprüche 1 bis 17, **dadurch gekennzeichnet, dass** das Laufnetz (14) an Befestigungsstellen (24) an den Führungsketten (4) angebracht ist und dass die Befestigungsstellen (24) sich im montierten Zustand zumindest außerhalb einer Reifenaufstandsfläche (27) wenigstens auf Höhe der Reifenschulter (12) befinden.

19. Gleitschutzkette (1) zur Anbringung an zwei abstandsunveränderlich angeordneten Rädern (25) mit Reifen (2), nach einem der Ansprüche 1 bis 18.

20. Fahrzeug mit zwei hintereinander angeordneten Rädern (25) mit Reifen (2), insbesondere einer Tandemachse, **gekennzeichnet durch** eine Gleitschutzkette (1) nach Anspruch 19.

## Claims

1. Anti-skid chain (1) to be attached to at least one tire (2), the anti-skid chain (1) comprising two lateral guide chains which are laterally stable and which, in the mounted state, are arranged laterally of the treads (12) of the tires (2), and a limp chain mesh (14) which extends between the two guide chains (4).

2. Anti-skid chain (1) according to claim 1, **characterized in that** the chain mesh (14) comprises ladder sections (16) which are connected with the rest of the chain mesh (14) exclusively via the guide chains (4).

3. Anti-skid chain (1) according to claim 1 or 2, **characterized in that** the chain mesh (14) comprises ladder sections (18) which extend continuously from the one to the other guide chain.

4. Anti-skid chain (1) according to one of claims 1 to 3, **characterized in that** the chain mesh (4) comprises ladder sections (16) provided with track edges (20), the track edges (20) extending in the circumferential direction (5).

5. Anti-skid chain (1) according to one of claims 1 to 4, **characterized in that** the chain mesh (14) is held together by the guide chains (4).

6. Anti-skid chain (1) according to one of claims 1 to 5, **characterized in that** the ladder sections (18) extend in the circumferential direction (5) over not more than the length (28) of the tire contact patch (27) in the circumferential direction (5).

7. Anti-skid chain (1) according to one of claims 1 to 6, **characterized in that** the guide chains (4) are embodied as plate link chains.

8. Anti-skid chain (1) according to one of claims 1 to 7, **characterized in that** the guide chains (4) comprise joint points (9) which, in the mounted state, lie at least at the level of the radially outer end of the tire wall (10).

9. Anti-skid chain (1) according to one of claims 1 to 8, **characterized in that** at least one guide chain (4) is embodied to be self-supporting.

10. Anti-skid chain (1) according to one of claims 1 to 9, **characterized in that** the guide chains (4) extend under their own weight at least in sections like the arc of a circle in a self-supporting radius (39).

11. Anti-skid chain (1) according to claim 10, **characterized in that** the self-supporting radius (39) is at least as large as the outer radius of the tire wall (10), taking into consideration the deformation by compression at the tire contact patch (27).

12. Anti-skid chain (1) according to claim 10 or 11, **characterized in that** the self-supporting radius (39) is at most as large as the radius (31) of the tire center (13) without taking into consideration the deformation by compression at the tire contact patch (27).

13. Anti-skid chain (1) according to one of claims 1 to 12, **characterized in that** the guide chains (4) comprise supporting elements (40) against which adjacent links (7, 8) of the guide chains (4) strike when tilted (38) about a maximum joint angle (43).

14. Anti-skid chain (1) according to one of claims 1 to 13, **characterized in that** the guide chains (4) are provided with links (7, 8) which in the radial direction (35) form guide elements (34) protruding to the inside.

15. Anti-skid chain (1) according to one of claims 1 to 14, **characterized in that** the guide chains (4) comprise plate-like links (7, 8) which form a tire accommodation channel (45) expanding from the chain mesh (14) in the radial direction (35) to the inside, the channel being defined in the lateral direction (6) by the guide chain (4) and in the radial direction (35) outside by the chain mesh (14).

16. Anti-skid chain (1) according to one of claims 1 to 15, **characterized in that** the guide chain (4) comprises links (7, 8) with essentially plane contact patches (47) extending in parallel to the circumferential direction (5), the contact patch extending in the lateral direction (6) away from the tire.

17. Anti-skid chain (1) according to one of claims 1 to 16, **characterized in that** the chain mesh (14) restricts the distance (44) between the guide chains (4) to at least the width of the tire (2) in the region of the tire contact patch (27).

18. Anti-skid chain (1) according to one of claims 1 to 17, **characterized in that** the chain mesh (14) is attached to fixing points (24) at the guide chains (4) and that the fixing points (24) are located in the mounted state at least outside a tire contact patch (27) at least at the level of the tire shoulder (12).

19. Anti-skid chain (1) to be attached to two wheels (25) with tires (2) arranged at fixed distances according to one of claims 1 to 18.

20. Vehicle with two wheels (25) with tires (2) arranged one behind the other, in particular of a tandem axle, **characterized by** an anti-skid device (1) according to claim 19.

## Revendications

1. Chaine antidérapante (1) destinée à être montée sur au moins un pneumatique (2), la chaine antidérapante (1) comprenant deux chaines de guidage latérales latéralement stables, qui, dans l'état monté, sont agencées latéralement aux surfaces de roulement (12) des pneumatiques (2), et comprenant également un treillis de roulement (14) lâche en flexion, qui s'étend entre les deux chaines de guidage (4).

2. Chaine antidérapante (1) selon la revendication 1, **caractérisée en ce que** le treillis de roulement (14) comporte des tronçons d'échelons (16), qui sont reliés au restant du treillis de roulement (14), exclusivement par l'intermédiaire des chaines de guidage (4).

3. Chaine antidérapante (1) selon la revendication 1 ou la revendication 2, **caractérisée en ce que** le treillis de roulement (14) comporte des tronçons d'échelons (16), qui s'étendent de manière continue de l'une à l'autre des chaines de guidage.

4. Chaine antidérapante (1) selon l'une des revendications 1 à 3, **caractérisée en ce que** le treillis de roulement (14) comporte des tronçons d'échelons (16) munis de guides de voie (20), les guides de voie (20) s'étendant dans la direction périphérique (5).

5. Chaine antidérapante (1) selon l'une des revendications 1 à 4, **caractérisée en ce que** le treillis de roulement (14) est maintenu assemblé par les chaines de guidage (4).

6. Chaine antidérapante (1) selon l'une des revendications 1 à 5, **caractérisée en ce que** les tronçons d'échelons (16) s'étendent dans la direction périphérique (5) sur pas plus de la longueur (28) de la surface d'appui au sol (27) du pneumatique dans la direction périphérique (5).

7. Chaine antidérapante (1) selon l'une des revendications 1 à 6, **caractérisée en ce que** les chaines de guidage (4) sont réalisées sous la forme de chaines articulées à plaques.

8. Chaine antidérapante (1) selon l'une des revendications 1 à 7, **caractérisée en ce que** les chaines de guidage (4) présentent des points d'articulation (9), qui, dans l'état monté, se situent au moins à hauteur de l'extrémité radialement extérieure du flanc de pneumatique (10).

9. Chaine antidérapante (1) selon l'une des revendications 1 à 8, **caractérisée en ce qu'**au moins une chaine de guidage (4) est d'une configuration autoporteuse.

10. Chaine antidérapante (1) selon l'une des revendications 1 à 9, **caractérisée en ce que** les chaines de guidage (4) s'étendent sous l'effet de leur poids propre, au moins en partie, de manière courbée en arc de cercle selon un rayon autoporteur (39).

11. Chaine antidérapante (1) selon la revendication 10, **caractérisée en ce que** le rayon autoporteur (39) est au moins aussi grand que le rayon extérieur du flanc de pneumatique (10) en tenant compte de l'écrasement au niveau de la surface d'appui au sol (27) du pneumatique.

12. Chaine antidérapante (1) selon la revendication 10 ou la revendication 11, **caractérisée en ce que** le rayon autoporteur (39) est au plus aussi grand que le rayon (31) du milieu (13) du pneumatique, sans prendre en considération l'écrasement au niveau de la surface d'appui au sol (27) du pneumatique.

13. Chaine antidérapante (1) selon l'une des revendications 1 à 12, **caractérisée en ce que** les chaines de guidage (4) présentent des éléments d'appui (40), contre lesquels viennent buter les maillons voisins (7, 8) des chaines de guidage (4), lors du basculement (38) d'un angle d'articulation maximum (43).

14. Chaine antidérapante (1) selon l'une des revendications 1 à 13, **caractérisée en ce que** les chaines de guidage (4) sont pourvues de maillons (7, 8) qui forment des éléments de guidage (34) faisant saillie vers l'intérieur dans la direction radiale (35).

15. Chaine antidérapante (1) selon l'une des revendications 1 à 14, **caractérisée en ce que** les chaines de guidage (4) présentent des maillons en forme de plaques (7, 8) formant un canal de logement de pneumatique (45), qui, à partir du treillis de roulement (14), s'évase vers l'intérieur dans la direction radiale (35) et est délimité dans la direction latérale (6), par la chaine de guidage (4), et dans la direction radiale (35), à l'extérieur, par le treillis de roulement (14).

16. Chaine antidérapante (1) selon l'une des revendications 1 à 15, **caractérisée en ce que** la chaine de guidage (14) comporte des maillons (7, 8) avec une surface d'appui (47) sensiblement plane, qui s'étend parallèlement à la direction périphérique (5), la surface d'appui s'étendant dans la direction latérale (6) de manière à s'éloigner du pneumatique.

17. Chaine antidérapante (1) selon l'une des revendications 1 à 16, **caractérisée en ce que** le treillis de roulement (14) limite la distance d'espacement (44) entre les chaines de guidage (4) à au moins la largeur du pneumatique (2) dans la zone d'appui au sol (27) du pneumatique.

18. Chaine antidérapante (1) selon l'une des revendications 1 à 17, **caractérisée en ce que** le treillis de roulement (14) est rapporté, au niveau de points de fixation (24), sur les chaines de guidage (4), et **en ce que** les points de fixation (24) se trouvent, dans l'état monté, au moins en-dehors d'une surface d'appui au sol (27) du pneumatique, au moins à hauteur de l'épaulement de pneumatique (12).

19. Chaine antidérapante (1) destinée à être placée sur deux roues (25) à pneumatiques (2), agencées à distance fixe l'une de l'autre, selon l'une des revendications 1 à 18.

20. Véhicule comprenant deux roues (25) à pneumatiques (2), agencées l'une derrière l'autre, notamment d'un essieu en tandem, **caractérisé par** une chaine antidérapante (1) selon la revendication 19.
